# EUROPEAN PATENT APPLICATION

(11) **EP 4 759 882 A1**
(43) Date of publication of application: **17.06.2026**
(21) Application number: 25223063.6
(22) Date of filing: 12.12.2025
(51) Int. Cl.: C08L 83/04

(54) **SILICONE SEALING COMPOSITION AND SEALING KIT**

(30) Priority: 12.12.2024 BE 202405881
(71) Applicant: DL Chemicals Detaellenaere-Loosvelt N.V., 8793 Waregem (BE)
(72) Inventor: Fourneau, Bart, 8793 Waregem (BE)
(74) Representative: Brantsandpatents bv

(57) **Abstract**

The present invention relates to a silicone sealant composition, comprising 25-90 wt% one or more polysiloxanes, 5-35 wt% one or more plasticizers, 2-6 wt% one or more crosslinkers and 0.01-0.3 wt% catalyst, characterized in that the silicone sealant composition comprises crosslinkers with an alkoxy group. This crosslinker, upon curing of the composition, comprises an emission of Volatile Organic Compounds of at most 50 g/L.

## Description

### TECHNICAL FIELD

The invention relates to the technical field of silicones, more specifically to the technical field of silicones of the alkoxy type.

### PRIOR ART

Silicones or polysiloxanes of the alkoxy type are synthetic substances which comprise repeating siloxane units and wherein the curing process is induced by hydrolysis and activation of alkoxy crosslinker molecules.

Polysiloxanes are chains of alternating silicon and oxygen atoms wherein the silicon atoms form bonds with hydrogen atoms and/or carbon-containing side chains. Polysiloxanes possess the ability to repel water and to form watertight seals. Furthermore, polysiloxanes exhibit a low thermal conductivity, low chemical reactivity and high resistance to the action of oxygen and ultraviolet light. As a result, silicones are often used as sealant. More specifically, the sealing is performed by applying a silicone sealant composition of the alkoxy type to an opening to be sealed, such as a groove, joint, slot or leakage. This composition contains an alkoxy crosslinker or is applied together with such a crosslinker. Moisture present in the air hydrolyses reactive groups of the alkoxy crosslinker into reactive hydroxyl and/or silanol groups. Said reactive hydroxyl and/or silanol groups condense further with hydrolysable groups of polymers or crosslinker molecules, whereby a hardened network of crosslinked polymers is formed. Said process is called the curing of a silicone sealant composition.

Silicone sealants are known from the prior art, as described in US20230044204. This document describes a two-part silicone system of which the pot life can be adjusted by varying the mixing ratio. Silicone seals are also known from US10711135. US '135 describes silicone compositions which cure to elastomers which can be applied as sealants.

Silicone sealants according to the current prior art exhibit a high adhesivity with respect to polyvinyl chloride and are slightly corrosive. This allows the sealants to be used on semi-sensitive materials. Nevertheless, it is known in the current prior art that silicone sealants often contain oximes, which are unsafe and harmful to health. In the current prior art, there is a need for improved and high-quality sealants. Furthermore, there is a high need for sealants which are safe for the producer and the user, without compromising on the quality thereof.

A problem with known silicone sealant compositions is the relatively large loss of volume after application and during curing of the silicone sealant composition. Shrinkage of silicones during the curing process reduces and/or minimizes the sealing ability of silicones.

An additional problem is that silicones according to the current prior art exhibit a relatively high hardness after the curing process. As a result, many of the current silicones lack a corrective ability when an opening contracts expands or varies after sealing with a silicone sealant. Another known problem in the current prior art is the large amount of waste which is related to the use of silicone sealant compositions.

The present invention aims to find a solution for at least some of the above problems.

### SUMMARY OF THE INVENTION

In a first aspect, the invention relates to a silicone sealant composition according to claim 1. Further preferred embodiments are set out in claims 2 to 14. The inventors of the present invention have found that the composition provides a high-quality sealant composition with an alkoxy crosslinker.

In a second aspect, the present invention relates to a sealant kit according to claim 15. More specifically, the present invention relates to a sealant kit comprising a silicone sealant composition according to any of claims 1-14 enclosed by an airtight package.

Preferred embodiments are:
1. A silicone sealant composition, wherein the composition is obtained by mixing:
   25-90 wt% one or more polysiloxanes selected from the group of α,ω-dihydroxypolydimethylsiloxane, aminoethylaminopropyl-functional polydimethylsiloxane; 5-35 wt% one or more plasticizers wherein the plasticizers comprise one or more organic plasticizers selected from the group of α,ω-trimethylsilyl polydimethylsiloxane, calcium stearate, phthalates, benzoates, adipates and hydrogenated petroleum distillates; 2-6 wt% one or more crosslinkers selected from the group of methyltrimethoxysilane, methyltriethoxysilane, vinyltrimethoxysilane, isobutyltrimethoxysilane, tetraethoxysilane, phenyltrimethoxysilane and propyltrimethoxysilane, preferably vinyltrimethoxysilane;
   0.5-2 wt% one or more adhesion promoters, wherein the adhesion promoters are amino-silane-based; and
   0.01-0.3 wt% catalyst;
   characterized in that the silicone sealant composition comprises crosslinkers, wherein said crosslinkers comprise an alkoxy group, characterized in that the curing comprises an emission of Volatile Organic Compounds of at most 50 g/L.
2. The silicone sealant composition according to preferred embodiment 1, characterized in that the composition comprises no crosslinkers with an oxime group.
3. The silicone sealant composition according to any of the preceding preferred embodiments, characterized in that the alkoxy crosslinkers are alkoxysilanes, wherein said alkoxysilanes have a molecular weight between 100 g/mol and 250 g/mol, theoretically calculated.
4. The silicone sealant composition according to any of the preceding preferred embodiments, characterized in that the polysiloxanes have a viscosity between 20,000 cps and 350,000 cps.
5. The silicone sealant composition according to any of the preceding preferred embodiments, characterized in that the catalyst is a catalyst based on dioctyltin oxide.
6. The silicone sealant composition according to any of the preceding preferred embodiments, characterized in that the composition comprises one or more stabilizers, selected from the group of vinyl acetate, ethylene, titanium dioxide.
7. The silicone sealant composition according to any of the preceding preferred embodiments, characterized in that the composition comprises 0.1-1 wt% methanol.
8. The silicone sealant composition according to any of the preceding preferred embodiments, characterized in that the composition optionally comprises one or more fungicides, selected from the group of benzisothiazolinone, methylisothiazolinone, chloromethylisothiazolinone, octylisothiazolinone and zinc pyrithione.
9. The silicone sealant composition according to any of the preceding preferred embodiments, characterized in that the composition comprises fumed silica.
10. The silicone sealant composition according to any of the preceding preferred embodiments, characterized in that the composition optionally comprises one or more color powders.
11. The silicone sealant composition according to any of the preceding preferred embodiments, characterized in that the composition exhibits a weight loss of at most 15% measured according to ISO standard 10563.
12. The silicone sealant composition according to any of the preceding preferred embodiments, characterized in that the composition exhibits a Shore A hardness of 5-35 measured according to ISO 868.
13. The silicone sealant composition according to any of the preceding preferred embodiments, characterized in that the composition exhibits a modulus of 0.1-0.6 N/mm² measured according to ISO 8339 at 100% deformation.
14. The silicone sealant composition according to any of the preceding preferred embodiments, characterized in that the composition exhibits skin formation within less than 35 minutes at 23°C and 50% relative humidity.
15. A sealant kit comprising a silicone sealant composition of the alkoxy type according to any of preferred embodiments 1-14, enclosed by an airtight package.
16. The sealant kit according to preferred embodiment 15, characterized in that the airtight package is a cylindrical, polyethylene, polypropylene or polyamide cartridge.
17. The sealant kit according to preferred embodiments 15-16, characterized in that the cylindrical cartridge comprises a nozzle and a plunger.
18. The sealant kit according to preferred embodiments 15-17, characterized in that the sealant kit comprises a hand-operated gun.
19. The sealant kit according to preferred embodiments 15-18, characterized in that the airtight package is a foil.
20. The sealant kit according to preferred embodiments 15-19, characterized in that the sealant kit comprises a foil-connectable nozzle.

The invention relates to a silicone sealant composition comprising a crosslinker with an alkoxy group.

Unless defined otherwise, all terms used in the description of the invention, including technical and scientific terms, have the meaning as commonly understood by a person skilled in the technical field of the invention. For a better assessment of the description of the invention, the following terms are explicitly explained.

As used in this document, the articles "a", "an" and "the" refer to both the singular and the plural, unless the context clearly dictates otherwise. For example, "a segment" means one or more segments.

When "around" or "about" is used in this document with respect to a measurable quantity, a parameter, a duration or point in time, and the like, this is intended to mean variations within ±20%, preferably within ±10%, more preferably within ±5%, even more preferably within ±1%, and still more preferably within ±0.1%, of the cited value, insofar as such variations are applicable to the invention described herein. However, it must be understood that the value of a quantity used where the term "about" or "around" is used, is itself specifically disclosed.

The terms "comprise", "comprising", "consist of", "consisting of", "provided with", "have", "having", "include", "including", "contain", "containing" are synonyms and are inclusive or open terms that indicate the presence of what follows, and which do not exclude or prevent the presence of other components, characteristics, elements, members, steps, as known from or disclosed in the prior art.

The citation of numerical ranges by their end points includes all integers, fractions, and/or real numbers between the end points, including the end points themselves.

Silicone sealant compositions are versatile materials which are used in construction, automotive, and industrial applications because of their excellent flexibility, water resistance and adhesion to various surfaces. These sealants form an elastic, durable layer which effectively protects against moisture, molds and extreme temperatures, making them ideal for seams, joints and surfaces which need long-lasting protection. The basis of the composition is often a polysiloxane polymer, which offers flexibility and stretchability. Crosslinkers are added to cure the material and to form a strong network.

Stabilizers, such as UV absorbers and antioxidants, protect the sealant against degradation by sunlight and oxygen, while fungicides prevent mold growth, which is especially useful in humid environments such as bathrooms and kitchens.

In a first aspect, the invention relates to a silicone sealant composition, wherein the composition is obtained by mixing 25-90 wt% one or more polysiloxanes, 5-35 wt% one or more plasticizers, 2-6 wt% one or more crosslinkers, 0.5-2 wt% one or more adhesion promoters and 0.01-0.3 wt% catalyst, characterized in that the silicone sealant composition comprises crosslinkers which comprise an alkoxy group. This composition comprises, during the curing, an emission of Volatile Organic Compounds of at most 50 g/L.

Polysiloxanes are polymers which are characterized by a unique Si-O-Si backbone (silicon-oxygen-silicon) with organic side chains, such as methyl or phenyl groups, which attach to the silicon atoms. This structure grants polysiloxanes their extraordinary properties, such as high flexibility, thermal stability, and resistance to water and chemicals. The combination of an inorganic silicon-oxygen chain with organic groups gives them the advantages of both inorganic and organic materials.

In sealants, polysiloxanes offer excellent elastic and sealing properties. Thanks to their flexibility, they continue to perform effectively under tension and elongation without tearing or losing their adhesion. This makes them ideal for applications in dynamic joints and connections where movement or vibration occurs, such as in building materials and automotive applications. Furthermore, polysiloxanes naturally repel water and let little moisture through, whereby they form an effective barrier in humid environments. Their thermal stability makes them resistant to high and low temperatures, which is essential for applications in extreme environments.

In sealant compositions, different types of polysiloxanes can be used, each with their own properties. Preferably, the polysiloxanes have a viscosity between 20,000 cps and 350,000 cps, preferably between 50,000 cps and 300,000 cps, more preferably between 100,000 cps and 250,000 cps, even more preferably between 150,000 cps and 200,000 cps.

In one embodiment, the silicone sealant composition comprises polysiloxanes selected from the group of α,ω-dihydroxypolydimethylsiloxane, aminoethylaminopropyl-functional polydimethylsiloxane, vinylpolydimethylsiloxane, phenylpolydimethylsiloxane. Preferably, the silicone sealant composition comprises α,ω-dihydroxypolydimethylsiloxane.

A silicone sealant composition according to the present invention comprises all components for curing, whereby it is simple and fast to use. Thanks to the very specific composition which has been developed by the inventors, a high-quality sealant composition of the alkoxy type is obtained.

A silicone sealant composition according to the present invention has the advantage that little to no volume loss occurs during the curing process. In classical sealant compositions, in the current prior art, cracks and/or damage arise in the silicone sealant composition and between the silicone sealant composition and the material to which the silicone sealant composition is applied during the curing of the silicone sealant composition. As a result, the silicone sealant composition loses uniformity and compactness, with as result an inefficient sealing of the sealing target.

In a silicone sealant composition, crosslinkers provide the curing process, wherein the material transitions from a liquid or paste-like form to a solid, elastic structure. Crosslinkers react with moisture from the air or other reactive components in the composition, which leads to crosslinking between the polysiloxane chains. This crosslinking process creates a stable and flexible network which is resistant to temperature fluctuations, moisture, and other environmental factors.

In one embodiment, the sealant composition comprises no crosslinker which comprises an oxime group. Oxime crosslinkers are based on methyl ethyl ketoxime (MEKO) and are prohibited or restricted in some regions because of health risks. MEKO can be released during the curing process and is classified as carcinogenic upon inhalation. Prolonged exposure to these vapors, especially in poorly ventilated spaces, can cause respiratory problems and increase the risk of cancer. In addition, oxime crosslinkers can have other harmful effects, such as irritation of the skin, eyes and respiratory tract.

In one embodiment, the silicone sealant composition comprises crosslinkers with an alkoxy group. This group comprises a reactive alkyl group which can interact with moisture in the air and thereby cures the polysiloxanes. Preferably, the crosslinker exhibits chemical similarities with the polysiloxane used. These crosslinkers have a molecular weight between 100 g/mol and 250 g/mol. The molecular weight can be theoretically calculated.

In one embodiment, the silicone sealant composition according to the present invention comprises one or more crosslinkers selected from the group of methyltrimethoxysilane, methyltriethoxysilane, vinyltrimethoxysilane, isobutyltrimethoxysilane and tetraethoxysilane, or any combinations of the foregoing. Preferably, the silicone sealant composition comprises vinyltrimethoxysilane.

In order to keep the silicone sealant composition workable during the production process and for the use of the composition, plasticizers can be added to the composition. These promote the plasticity of the composition which provides for a kneadable, paste-like substance before the composition is cured. In one embodiment, the silicone sealant composition comprises one or more organic plasticizers. Organic plasticizers have better biodegradability, are less harmful to the environment and health and induce fewer chemical reactions than inorganic plasticizers. By adding one or more organic plasticizers to a silicone sealant composition, a smaller amount of inorganic plasticizers needs to be added.

In a preferred embodiment, a silicone sealant composition of the alkoxy type according to the present invention comprises one or more plasticizers selected from the group of, but not limited to, C4 to C8 alkyl terephthalate compounds including di-n-butyl terephthalate and di(2-ethylhexyl) terephthalate, glycerol triacetate (triacetin), 2,2,4-trimethyl-1,3-pentanediol diisobutyrate, phthalate esters (for example dioctyl phthalate, di-2-ethylhexyl phthalate, diisophthalate, diisononyl phthalate, di-linear nonyl phthalate, di-linear nonyl undecyl phthalate, di-linear undecyl phthalate, diundecyl phthalate, diisodecyl phthalate, C6-C10 straight-chain phthalates, C7 linear phthalate, C9 linear phthalate, C11 linear phthalate, ditridecyl phthalate, undecyl dodecyl phthalate, di(2-propylheptyl) phthalate, nonyl undecyl phthalate, texanol benzyl phthalate, polyester phthalate, diallyl phthalate, n-butyl phthalyl-n-butyl glycosate, dicapryl phthalate, butyl cyclohexyl phthalate, dicyclohexyl phthalate, butyl octyl phthalate, dioctyl adipate, di-2-ethylhexyl adipate, diisononyl adipate, diiso adipate, diisodecyl adipate, ditridecyl adipate, dibutoxyethyl adipate, dibutoxyethoxy adipate, di(n-octyl, undecyl) adipate, polyester adipate, polyglycol adipates, trioctyl trimellitate, tri-2-ethylhexyl trimellitate, triisooctyl trimellitate, triisononyl trimellitate, triisodecyl trimellitate, tri-n-hexyl trimellitate, dioctyl azelate, di-2-ethylhexyl glutarate, di-2-ethylhexyl sebacate, dibutyl sebacate, dibutoxyethyl sebacate, triethyl citrate, acetyl triethyl citrate, tri-n-butyl citrate, acetyl tri-n-butyl citrate, acetyl tri-n-hexyl citrate, n-butyl tri-n-hexyl citrate, isodecyl benzoate, diethylene glycol dibenzoate, dipropylene glycol dibenzoate, triethylene glycol dibenzoate, 1,4-cyclohexanedimethanol dibenzoate, 2,2,4-trimethyl-1,3-pentanediol dibenzoate, 2,2-dimethyl-1,3-propanediol dibenzoate, C10-C21 alkane phenol esters or alkyl sulfonic acid phenyl esters, acetic-acid reaction products with fully hydrogenated castor oil, pentaerythritol tetrabenzoate, glycerol tribenzoate, polypropylene glycol dibenzoate, triaryl phosphates, diisononyl cyclohexane-1,2-dicarboxylate, polymers of adipic acid / phthalates / adipates / sebacates with glycols and often acid-terminated, butyl benzyl phthalate, alkyl benzyl phthalate, C7-C9 butyl phthalate, diethylene glycol dibenzoate, dipropylene glycol dibenzoate, 2-ethylhexyl benzoate, C9 benzoates, C10 benzoates, texanol benzoate, ethylene glycol dibenzoate, propylene glycol dibenzoate, triethylene glycol dibenzoate, diheptyl phthalate, dihexyl phthalate, dimethyl phthalate, diethyl phthalate, dibutyl phthalate, diisobutyl phthalate, α,ω-trimethylsilyl polydimethylsiloxane, calcium stearate, and hydrogenated petroleum distillates, or any combinations of the foregoing. Most preferably, the silicone sealant composition of the alkoxy type comprises one or more plasticizers selected from silicone oil comprising non-reactive polymers and hydrogenated petroleum distillates with a carbon chain comprising 11 to 25 carbon atoms.

Silicone sealant compositions may comprise adhesion promoters. Adhesion promoters are additives which improve the adhesion between the sealant composition and various substrates, such as glass, metal, plastic or concrete. Without adhesion promoters, the silicone may struggle to remain firmly adhered to surfaces, especially under challenging conditions such as moisture, temperature fluctuation and mechanical load.

Adhesion promoters form a bridge between the silicone matrix and the substrate. They typically have reactive groups which can bond with both the substrate and the polysiloxane, whereby they enable better adhesion. By creating a stronger interface, they improve the mechanical bond and extend the service life of the seal under stressful conditions. In one embodiment, the silicone sealant composition comprises one or more adhesion promoters, preferably amino-silane-based adhesion promoters. Amino-silane-based adhesion promoters have a hydrophilic group which reacts with the substrate and an organic group which can form covalent or secondary bonds with the silicone chains.

Without wishing to be limiting, it was established that the separate provision of (i) one or more crosslinkers and (ii) one or more adhesion promoters, wherein both components fulfill different chemical functions and are not combined in a single multifunctional molecule, yields an unexpected technical effect. The crosslinker reacts mainly in the bulk of the silicone sealant composition and ensures there a robust and uniform network formation, while the adhesion promoter exhibits a higher mobility and migrates to the substrate surface, where it selectively reacts with available surface groups.

This functional separation makes it possible to optimize cohesive properties (such as modulus, hardness and volume stability) independently of the adhesive properties (such as adhesion to glass, metals or plastics). As a result, an improved and more reliable balance between adhesion and cohesion is obtained compared to known compositions, wherein both functions are combined in one and the same compound or wherein the components are not selected such that such a migration and selective reactivity occurs.

It was also seen that this separate approach also contributes to reducing the total amount of necessary reactive groups and thus to a formulation which exhibits a low VOC emission during curing (at most 50 g/L). This effect appears not to be achievable with classical multifunctional silanes from the prior art, which exhibit a less controlled distribution and reactivity.

The curing of the silicone sealant composition is a chemical process which can be accelerated by a catalyst. Catalysts accelerate the reaction which converts the liquid, paste-like silicone into a firm, elastic end product. Namely, they ensure that the crosslinkers react faster and more efficiently with the polysiloxanes. As a result, the crosslinking takes place faster, which leads to a stable and elastic network which is resistant to mechanical load, moisture and temperature fluctuations. Without catalysts, curing would be slower or incomplete, which would affect the performance of the sealant. **In** one embodiment, the catalyst is selected from the group of, but not limited to, dibutyltin dilaurate (DBTDL), stannic oxide (tin oxide), tetrabutyl titanate, dioctyltin oxide, tetramethyldivinyltin, platinum catalyst (e.g. Karstedt catalyst), divinylsilane, ethyltriacetoxysilane, methyltriacetoxysilane, alkyl titanates (e.g. tetrabutyl titanate), zirconium acetylacetonate, amine catalysts (e.g. trimethylamine), cobalt oxide, chromium oxide, cyclopentadienyl titanium compounds, borate- and aluminate-based catalysts, dibutyltin diacetate, dibutyltin oxide, titanium chelate, titanates. In a preferred embodiment, the silicone sealant composition comprises a catalyst based on dioctyltin oxide.

In addition to a catalyst, an initiator can also be added to initiate the curing reaction. In an alkoxy-cured silicone sealant, methanol works for this. This occurs because methanol initiates the crosslinking reaction when the alkoxy crosslinkers come into contact with moisture, which leads to hydrolysis and the formation of alcohols. This reaction produces a small amount of methanol which helps to promote the further curing reaction. Substances other than methanol are also possible; in one embodiment, the initiator is selected from the group of, but not limited to, ethanol, isopropanol, butanol, methyltriacetoxysilane, ethyltriacetoxysilane, diethylaminopropyltrimethoxysilane, dibutylaminopropyltriethoxysilane, tin(II) octoate, dibutyltin dilaurate, tetramethylguanidine, amino alkoxysilanes, organophosphates, and organotitanates. In a preferred embodiment, the silicone sealant composition comprises methanol in a concentration between 0.1 and 1 wt%.

Furthermore, a sealant composition may comprise one or more stabilizers. These additives improve the stability of the product, both during storage and during use. They help to maintain the physical and chemical properties of the sealants and offer protection against degrading influences such as UV radiation, heat, moisture and oxidation. The function of stabilizers is versatile. They slow down the degradation of polysiloxanes by environmental factors, which extends the service life of the end product. In addition, they improve the processing by ensuring that the composition remains homogeneous during production, whereby consistent performance and quality are guaranteed.

Stabilizers must be chemically inert, which means that they must be compatible with the other ingredients in the formulation and must not cause unwanted reactions. They are often effective at low concentrations, whereby only small amounts are needed to have a significant impact on the stability of the product. One of the functions of stabilizers is slowing down the curing process of a silicone sealant composition. Because a silicone sealant composition in one embodiment comprises one or more stabilizers, it is avoided that the silicone sealant composition cures faster than desired. In addition, the sealant composition can be processed more easily, giving a user more time to apply the sealant composition to one or more sealing targets, or, if applicable, to make corrections to one or more silicone sealant compositions that have just been applied. In one embodiment, stabilizers are selected from the group of, but not limited to, UV-absorbing benzotriazoles, hindered amine light stabilizers (HALS), butylhydroxytoluene (BHT), phenolic antioxidants, phosphites, organophosphites, zinc oxide, magnesium oxide, titanium dioxide, organotin compounds, zirconium carboxylate, calcium carbonate, phenolic-hindered antioxidants, triphenyl phosphite, distearyl pentaerythritol diphosphite, dialkyl phosphites, hindered phenol stabilizers, sulfurcontaining antioxidants. The stabilizers are preferably selected from the group of vinyl acetate, ethylene and titanium dioxide. In a preferred embodiment, the stabilizer comprises at least titanium dioxide.

In one embodiment, the silicone sealant composition comprises one or more fungicides. Provision of fungicides in a silicone sealant composition according to the present invention prevents that molds and/or associated microorganisms can colonize the silicone sealant composition. In this way, it is avoided that silicone sealant compositions and/or the sealing target are contaminated and possibly damaged by aforementioned microorganisms. In one embodiment, the fungicide is selected from the group of, but not limited to, zinc pyrithione, diiodomethyl-p-tolylsulfone (DIT), octylisothiazolinone (OIT), 2-n-octyl-4-isothiazolin-3-one, N-(trichloromethylthio)phthalimide (Folpet), benzisothiazolinone (BIT), methylisothiazolinone (MIT), chloromethylisothiazolinone (CMIT), propiconazole, iodocarb, and terbutryn.

In one embodiment, the silicone sealant composition comprises fumed silica. In a preferred embodiment, the silicone sealant composition comprises 3 wt% to 10 wt% fumed silica. Adding an amount of fumed silica increases the viscosity of the silicone sealant composition in such a way that it does not run out after application, but is yet sufficiently fluid to seal and/or cover rough and/or uneven sealing targets in an efficient manner. This simplifies the application of a silicone sealant composition substantially.

In one embodiment, the silicone sealant composition comprises one or more color powders. This addition induces coloration of the composition and allows provision for aesthetic wishes and/or needs for the use of the silicone sealant composition. The color powder can be selected from the group of, but not limited to, red, blue, yellow, green, orange, purple, pink, brown, black, white, gray, turquoise, beige, magenta, lime, cyan, indigo, olive green, gold, silver, lavender, coral, peach, khaki, emerald green, navy blue, burgundy, mint green, terracotta, sepia, anthracite, cream-colored, fuchsia, cerulean, aubergine, petrol, sanguine, sapphire, dark red, and lemon.

In one embodiment, the silicone sealant composition exhibits a weight loss of at most 20%, more preferably at most 15%, even more preferably at most 10% measured according to ISO standard 10563. This low weight loss offers various advantages. Firstly, a limited weight loss indicates an excellent stability of the composition during and after the curing, which extends the service life of the sealant. It also helps in maintaining mechanical properties such as flexibility and adhesion, even under prolonged exposure to stressful environments. In addition, it reduces the risk of shrinkage, which prevents cracks and detachments and promotes the overall sealing quality. Finally, a composition with minimal weight loss is also more resistant to evaporation of volatile substances, with a safe and sustainable application without harmful emissions as a result.

Silicone sealant compositions can exhibit a hardness. The hardness is the resistance which a material offers against permanent deformation. A sealant having a low hardness is more flexible and more extensible, whereas a silicone sealant composition having a higher hardness is rather rigid and provides greater resistance to abrasion and extrusion. In one embodiment, the silicone sealant composition exhibits a Shore A hardness between 5-35.

Thanks to this hardness, the composition exhibits flexibility to accommodate fluctuations in certain parameters of a sealing target, such as size, depth, surface area or volume. The flexibility as a result of the low hardness allows the composition according to said embodiment to expand and/or shrink to a limited extent if necessary. As a result, an optimal sealing of the sealing target is maintained in the case one or more parameters of the sealing target alternate as a function of time.

In a preferred embodiment of a silicone sealant composition according to the present invention, the silicone sealant composition exhibits a modulus of 0.1-0.6 N/m² measured according to ISO standard 8339.

The time to skin formation of a silicone sealant composition provides an indication of the speed of curing of the silicone sealant composition. In a preferred embodiment of a silicone sealant composition according to the present invention, the silicone sealant composition exhibits skin formation within less than 35 minutes at 23°C and 50% relative humidity. This has the advantage that the composition cures relatively fast, but that a user still has sufficient time to make any corrections to a, for example, wrongly applied silicone sealant composition.

In a second aspect, the invention relates to a method for producing a silicone sealant composition as described above. This method comprises mixing one or more plasticizers selected from the group of, but not limited to, C4 to C8 alkyl terephthalate compounds, including di-n-butyl terephthalate and di(2-ethylhexyl) terephthalate, glycerol triacetate (triacetin), 2,2,4-trimethyl-1,3-pentanediol diisobutyrate, phthalate esters (for example dioctyl phthalate, di-2-ethylhexyl phthalate, diisophthalate, diisononyl phthalate, di-linear nonyl phthalate, di-linear nonyl undecyl phthalate, di-linear undecyl phthalate, diundecyl phthalate, diisodecyl phthalate, C6-10 straight-chain phthalates, C7 linear phthalate, C9 linear phthalate, C11 linear phthalate, ditridecyl phthalate, undecyl dodecyl phthalate, di(2-propylheptyl) phthalate, nonyl undecyl phthalate, texanol benzyl phthalate, polyester phthalate, diallyl phthalate, n-butyl phthalyl-n-butyl glycosate, dicapryl phthalate, butyl cyclohexyl phthalate, dicyclohexyl phthalate, butyl octyl phthalate, dioctyl adipate, di-2-ethylhexyl adipate, diisononyl adipate, diiso adipate, diisodecyl adipate, ditridecyl adipate, dibutoxyethyl adipate, dibutoxyethoxy adipate, di(n-octyl, undecyl) adipate, polyester adipate, polyglycol adipates, trioctyl trimellitate, tri-2-ethylhexyl trimellitate, triisooctyl trimellitate, triisononyl trimellitate, triisodecyl trimellitate, tri-n-hexyl trimellitate, dioctyl azelate, di-2-ethylhexyl glutarate, di-2-ethylhexyl sebacate, dibutyl sebacate, dibutoxyethyl sebacate, triethyl citrate, acetyl triethyl citrate, tri-n-butyl citrate, acetyl tri-n-butyl citrate, acetyl tri-n-hexyl citrate, n-butyl tri-n-hexyl citrate, isodecyl benzoate, diethylene glycol dibenzoate, dipropylene glycol dibenzoate, triethylene glycol dibenzoate, 1,4-cyclohexanedimethanol dibenzoate, 2,2,4-trimethyl-1,3-pentanediol dibenzoate, 2,2-dimethyl-1,3-propanediol dibenzoate, C10-C21 alkane phenol esters or alkyl sulfonic acid phenol esters, acetic-acid reaction products with fully hydrogenated castor oil, pentaerythritol tetrabenzoate, glycerol tribenzoate, polypropylene glycol dibenzoate, triaryl phosphates, diisononyl cyclohexane-1,2-dicarboxylate, polymers of adipic acid / phthalates / adipates / sebacates with glycols and often acid-terminated, butyl benzyl phthalate, alkyl benzyl phthalate, C7-C9 butyl phthalate, diethylene glycol dibenzoate, dipropylene glycol dibenzoate, 2-ethylhexyl benzoate, C9 benzoates, C10 benzoates, texanol benzoate, ethylene glycol dibenzoate, propylene glycol dibenzoate, triethylene glycol dibenzoate, diheptyl phthalate, dihexyl phthalate, dimethyl phthalate, diethyl phthalate, dibutyl phthalate, diisobutyl phthalate, or any combinations of the foregoing. Most preferably, the silicone sealant composition of the alkoxy type comprises one or more plasticizers selected from silicone oil comprising non-reactive polymers and hydrogenated petroleum distillates with a carbon chain comprising 11 to 25 carbon atoms.

Furthermore, the method for producing a silicone sealant composition comprises the adding of one or more alkoxy crosslinkers, selected from the group of, but not limited to, methyltrimethoxysilane, methyltriethoxysilane, vinyltrimethoxysilane, isobutyltrimethoxysilane and tetraethoxysilane, or any combinations of the foregoing.

In one embodiment, the method comprises the adding of one or more stabilizers during the mixing of one or more polysiloxanes and one or more plasticizers. By adding one or more stabilizers at the start of the method, the curing process of the silicone sealant composition is slowed down. This has the advantage that the silicone sealant composition can be processed more easily and it is avoided that the silicone sealant composition already cures during the production process.

Furthermore, the method comprises the adding of one or more fungicides during the mixing of one or more polysiloxanes and one or more plasticizers. Addition of one or more fungicides at the start of the production process has the advantage that potentially present molds get no chance to colonize the silicone sealant composition during the production process. **In** this way, it is avoided that produced quantities of silicone sealant compositions are contaminated and wasted during the production process.

**In** one embodiment, the method comprises the adding and mixing in of fumed silica after the adding of one or more crosslinkers. Fumed silica increases the viscosity of a silicone sealant composition, which ensures that the composition is easier to process and to handle during the production process.

**In** a further embodiment, the method comprises the adding and mixing in of one or more color powders after the adding of one or more crosslinkers. By adding one or more color powders, it is possible to produce a large, uncolored batch of silicone sealant composition which is subsequently divided into two or more sub-batches to which one or more color powders can be added. As a result, it is possible to produce various colored silicone sealant compositions via one production process. This in turn has the advantage that the production proceeds faster, more efficiently and cheaper.

In a third aspect, the present invention relates to a sealant kit comprising a silicone sealant composition of the alkoxy type as described above, enclosed by an airtight package. An airtight package prevents that a silicone sealant composition according to the present invention cures before this is desired and extends the shelf life of the composition. Furthermore, the transport and the storage thereof are substantially simplified by the airtight package.

In one embodiment, the airtight package is a cylindrical, polyethylene, polypropylene or polyamide cartridge. The present invention exhibits little to no adhesion towards these polymers, as a result of which the silicone sealant composition is easy to remove from such a cartridge. The cartridge can be cylindrical, whereby it comprises no irregularities, whereby the amount of remaining silicone which remains behind is minimized.

In one embodiment, the cylindrical cartridge comprises a nozzle and a plunger. This allows a user to take a silicone sealant composition out of a cartridge by moving the plunger in the direction of the nozzle.

In one embodiment, the sealant kit comprises a hand-operated gun. A hand-operated gun substantially facilitates moving a slidable bottom element toward the nozzle of the cartridge. Thus, the hand-operated gun simplifies the dispensing of a silicone sealant composition from said cartridge.

A known problem in the prior art is the large amount of waste when using one or more silicone sealant compositions on a frequent basis. In one embodiment, the airtight package is a foil. Said foil can, after using up a sealant kit according to said embodiment, be stored compactly. In this way, the amount of waste is limited. An additional advantage of foil as airtight package is that a smaller storage space is needed for the storing of a said sealant kit. This allows for a larger quantity of sealing kits to be stored, or requires a smaller location to store the same number of sealing kits.

In a further embodiment, the sealant kit comprises a foil-connectable nozzle. This has the advantage that a silicone sealant composition can be applied simply and directly from the foil package onto the sealing target.

In the following, the invention is described by means of non-limiting examples illustrating the invention, and which are not intended or to be interpreted to limit the scope of the invention.

### EXAMPLES

### EXAMPLE 1

A silicone sealant composition of the alkoxy type was produced as follows:
Mixing 30-70 wt% polysiloxanes with 10-30 wt% plasticizer and 0.1-0.9 wt% stabilizer. Subsequently adding 3-5 wt% alkoxy crosslinker, after which mixing 4-9 wt% fumed silica. Afterwards adding and mixing 1-1.5 wt% adhesion promoter. Finally adding 0.05-1 wt% catalyst. Said silicone sealant comprises the following ingredients:

| **Ingredient** | **wt%** |
|---|---|
| Polysiloxanes | 30-70 |
| Plasticizer | 10-30 |
| Stabilizer | 0.1-0.9 |
| Alkoxy crosslinker | 3-5 |
| Fumed silica | 4-9 |
| Adhesion promoter | 1-1.5 |
| Catalyst | 0.05-0.1 |

This silicone sealing composition was tested on the following parameters.

| **Parameter** | **Result** |
|---|---|
| Volume loss (%) [ISO 10563] | 5 |

| | |
|---|---|
| Weight loss (%) [ISO 10563] | 2 |
| Shore A hardness [ISO 868] | 12 |
| Modulus at 100% (N/mm²) [ISO 8339] | 0.2 |
| Skin formation at 23°C and 50% RH (min) | 10 |
| Curing speed after 24 hours at 23°C and 50% RH (mm) | 7 |

### EXAMPLE 2

Comparison of the silicone sealant composition according to Example 1 with compositions from the prior art.
- Composition S1: a two-component silicone corresponding to composition 6 of US 20230044204, mixed in an A:B ratio of 13:1 (w/w), comprising a mixture of hydroxyl-terminated polydimethylsiloxanes in component A and a combination of organosilanes V1/V2/V3 and a tin catalyst in component B.

- Composition S2: a two-component silicone corresponding to Example 1 of US10711135, with an A component comprising a hydroxy-functionalized polydimethylsiloxane and fillers, and a B component comprising an oxime-based crosslinker (LM400), an amino-silane adhesion promoter (AMMO), a tin catalyst (UL 38) and fillers.

Composition S3 corresponds to the one-component silicone sealant composition of the alkoxy type described in Example 1 of this invention, comprising 25-90 wt% polysiloxane, 5-35 wt% plasticizer, 2-6 wt% alkoxy crosslinker, 0.5-2 wt% amino-silane adhesion promoter and 0.01-0.3 wt% catalyst, without oxime crosslinker and with a VOC emission during curing of at most 50 g/L.

### Test method

The mechanical properties are determined after 7 days curing at 23-25 °C and 50% relative humidity.
- Shore A hardness is determined according to ISO 868.
- Tensile strength and elongation at break are determined according to ISO 37 (S2 test specimens, 2 mm).
- Lap-shear strength on aluminum is determined according to DIN EN 1465 / ASTM D1002 on Alclad aluminum strips (2 mm layer thickness, 7 days curing).
- For composition 3, volume loss and weight loss are additionally measured according to ISO 10563, and the VOC emission is determined according to a standard VOC method (ISO 11890-2).

### Results

For S1 and S2, the values displayed in table 1 are based on the test results reported in US20230044204 and US10711135, respectively. For S3, the values for volume loss, weight loss, Shore A hardness, modulus, skin formation, tensile and lap-shear values and VOC value are based on the composition from example 1.

**Table 1: Comparison between S1, S2 and S3**

| *n.r. = not reported in the respective documents.* | | | |
|---|---|---|---|
| **Property (7d, 23-25 °C, 50% RH)** | **S3** | **S1** | **S2** |
| Shore A hardness | approx. 12 | approx. 49 | approx. 27 |
| Tensile strength [MPa] | approx. 2.0 | approx. 2.2 (typical) | approx. 1.9 (270 psi) |
| Elongation at break [%] | approx. 250 | approx. 200 | approx. 200 |
| Lap-shear strength on aluminum [MPa] | approx. 1.6 | approx. 1.3 | approx. 1.4 (205 psi) |
| Volume loss [%] (ISO 10563) | approx. 5 | n.r. | n.r. |
| Weight loss [%] (ISO 10563) | approx. 2 | n.r. | n.r. |
| Modulus at 100% elongation [MPa] | approx. 0.2 | > 1.5 | n.r. |
| VOC emission during curing [g/L] | ≤ 50 (expected approx. 45) | > 50 (oxime-free but with high organosilane loading, expected) | > 80 (oxime/MEKO-containing, expected) |

| | | | |
|---|---|---|---|
| *n.r. = not reported in the respective documents.* | | | |

Although composition S3 exhibits a significantly lower hardness and modulus than the compositions according to S1 and S2, the lap-shear strength on aluminum lies at the same or a higher level. This indicates an improved balance between cohesion (bulk properties) and adhesion (adhesion to the substrate).

This improved balance is attributed to the functional separation between (i) an alkoxy crosslinker which reacts mainly in the bulk of the composition and builds up a finely tuned polymer network, and (ii) a separate amino-silane adhesion promoter which can migrate to and react at the substrate surface. As a result, the composition can remain soft and low-modulus, while the adhesion to metals and plastics remains high.

In addition, a VOC emission of at most 50 g/L is achieved for S3 on the basis of the use of exclusively alkoxy crosslinkers without oxime groups and a limited amount of volatile components. The comparative systems according to S2 make use of an oxime crosslinker (LM400) which, upon curing, releases 2-butanone oxime (MEKO), and are expected to exhibit a higher VOC content. The organosilane-rich component B of S1 likewise does not contain any specific limitation on VOC content.

This example illustrates that the claimed composition yields not only a synergistic combination of low hardness/low modulus with high adhesion, but also a significantly lower VOC level, which is not achieved in the cited documents D1 and D2.

## Claims

1. A silicone sealant composition, wherein the composition is obtained by mixing:
25-90 wt% one or more polysiloxanes selected from the group of α,ω-dihydroxypolydimethylsiloxane, aminoethyl-aminopropyl functional polydimethylsiloxane; 5-35 wt% one or more plasticizers wherein the plasticizers comprise one or more organic plasticizers selected from the group of α,ω- trimethylsilylpolydimethylsiloxane, calcium stearate, phthalates, benzoates, adipates and hydrogenated petroleum distillates; 2-6 wt% one or more crosslinkers selected from the group of methyltrimethoxysilane, methyltriethoxysilane, vinyltrimethoxysilane, isobutyltrimethoxysilane, tetraethoxysilane, phenyltrimethoxysilane and propyltrimethoxysilane, preferably vinyltrimethoxysilane;
0.5-2 wt% one or more adhesion promoters, wherein the adhesion promoters are amino-silane-based; and
0.01-0.3 wt% catalyst;
**characterized in that** the silicone sealant composition comprises crosslinkers, wherein said crosslinkers comprise an alkoxy group, **characterized in that** the curing comprises an emission of Volatile Organic Compounds of at most 50 g/L.

2. The silicone sealant composition according to claim 1, **characterized in that** the composition comprises no crosslinkers with an oxime group.

3. The silicone sealant composition according to any of the preceding claims, **characterized in that** the alkoxy crosslinkers are alkoxysilanes, wherein said alkoxysilanes have a molecular weight between 100 g/mol and 250 g/mol, theoretically calculated.

4. The silicone sealant composition according to any of the preceding claims, **characterized in that** the polysiloxanes have a viscosity between 20,000 cps and 350,000 cps.

5. The silicone sealant composition according to any of the preceding claims, **characterized in that** the catalyst is a catalyst based on dioctyltin oxide.

6. The silicone sealant composition according to any of the preceding claims, **characterized in that** the composition comprises one or more stabilizers, selected from the group of vinyl acetate, ethylene, titanium dioxide.

7. The silicone sealant composition according to any of the preceding claims, **characterized in that** the composition comprises 0.1-1 wt% methanol.

8. The silicone sealant composition according to any of the preceding claims, **characterized in that** the composition optionally comprises one or more fungicides, selected from the group of benzisothiazolinone, methylisothiazolinone, chloromethylisothiazolinone, octylisothiazolinone and zinc pyrithione.

9. The silicone sealant composition according to any of the preceding claims, **characterized in that** the composition comprises fumed silica.

10. The silicone sealant composition according to any of the preceding claims, **characterized in that** the composition optionally comprises one or more color powders.

11. The silicone sealant composition according to any of the preceding claims, **characterized in that** the composition exhibits a weight loss of at most 15%, measured according to ISO standard 10563.

12. The silicone sealant composition according to any of the preceding claims, **characterized in that** the composition exhibits a Shore A hardness of 5-35, measured according to ISO 868.

13. The silicone sealant composition according to any of the preceding claims, **characterized in that** the composition exhibits a modulus of 0.1-0.6 N/mm², measured according to ISO 8339 at 100% deformation.

14. The silicone sealant composition according to any of the preceding claims, **characterized in that** the composition exhibits skin formation within less than 35 minutes at 23°C and 50% relative humidity.

15. A sealant kit comprising a silicone sealant composition of the alkoxy type according to any of claims 1-14, enclosed by an airtight package.
